# EUROPEAN PATENT APPLICATION

(11) **EP 1 630 538 A2**
(43) Date of publication of application: **01.03.2006**
(21) Application number: 05398009.0
(22) Date of filing: 23.08.2005
(51) Int. Cl.: G01N 3/00

(54) **Process and device for testing the abrasive properties of paper and other materials in the form of thin sheets**

(30) Priority: 24.08.2004 PT 10318604
(71) Applicant: Soporcel - Sociedade Poertuguesa de Papel, S.A., 3081-851 Figueira da Foz (PT)
(72) Inventor: Sérgio de Jesus, Engracia Cristina, 3630-340 Penedono (PT); Mouta Dias, Joao Paulo, 3020-144 Coimbra (PT); Gomes de Oliveira, Nuno José Reis, 3080-874 Figueira da Foz (PT)
(74) Representative: Pereira da Cruz, Joao

(57) **Abstract**

The present invention refers to a process and test equipment for paper sheets and other materials in the form of sheet, for characterisation of products in what concerns its abrasiveness. The invention allows evaluating and quantifying in a reproducible way, and according to a swift method, the abrasiveness of the test surfaces, thus allowing its characterisation and Quality Control. The test procedure is based on the abrasive wearing principle of a proof body (pin) against the surface to be tested, having measuring, registry and transmission of information devices that allow evaluating in real time the property in test. The system was developed particularly for the analysis of paper and using the graphite pin or several types of rubbers, but it can be adapted to any material that is presented in the form of sheet or plaque, of plane regular surfaces such as cardboards, tissues or others, and pins of other materials that are usually subject to abrasive contact with this products. As illustrating but not limitative examples can be referred elastometers or plastics.

## Description

### Field of the Invention

The invention refers to a test equipment and process for paper sheets, for evaluation and characterisation of its abrasiveness, by a process of abrasive wearing of a graphite or rubber pin against the surface of the paper, with a relative linear movement of the latter.

The equipment and process of this patent can also be applied to other materials in the form of sheets or plaques, and with other materials as wearing pins, as long as these ones may emulate the abrasiveness of the product under test.

The pin itself can also be object of experiment, with this equipment and process, if the characterisation required is the wearing that certain material in the form of sheet causes in products in abrasive contact with them.

The abrasiveness is measured through the calculation of the slope of the function that translates the pin wear along a certain covered distance.

The test equipment has devices of monitoring and logging the variables and experiment parameters, and an end-user interface that allows operating the equipment in a fast and intuitive way. The control devices also allow programming test routines, according to certain paths and sequences defined as standard for the characterisation of this property.

The equipment also has a test data storage system, and means to make the data available on the network for queries and processing.

### Prior Art

The existing solutions for determination of the properties related to the paper abrasiveness are focused in a test principle inverse to the one of this invention, as they evaluate the sheet resistance to the abrasion, by several wear inducing processes, and not the abrasive properties of the paper itself. In the universe of the manufacture and test of the paper, a well-known example of this type of test is the so-called "Taber Abrasion", where a relative rotation between the paper sample and an abrasive surface is forced, being the sample weighed in order to determine the loss of material (in this case, paper) by abrasion.

Besides this resistance of the paper to abrasion, addressed, for instance by the "Taber" method previously described, the characterisation of the abrasion caused by paper, which is the object of this invention, assumes great importance at the industrial level, since there are several devices that are in permanent abrasive contact with the paper, e.g. the paper production and transformation machines, and final use devices, such as: printers, photocopiers, faxes, etc.

Also relevant is to have a test equipment and process, of laboratorial character, that allows evaluating that property in a fast and swift way, creating clear and easily integrable records. In this way an integrated control can be made with the productive process, generating the necessary feed-back of one of the relevant properties of characterisation of this type of materials.

The best known methods to measure the abrasiveness of the paper are based on the loss of mass of a blade (patent US 3827281) or of a needle (Needle Penetration Test - Institute of Paper Science and Technology, Atlanta, GA, USA) throughout the paper's thickness. These methods, besides being delicate due to the small mass loss of involved are representative of the abrasiveness of the paper's structure, while the type of effect that is object of this invention has to do with the interaction with the paper's surface.

The abrasion evaluation method and coefficient of friction between a film-type material and a cylindrical object present in patent US 5 542 281 also addresses the interaction question between the type of surfaces that are object of this invention, presenting, however, two clear disadvantages. First, the adopted geometry doesn't allow any measuring method of the actual wear of the materials along the experiment, but of the friction coefficient. Secondly, the fact that film-type materials adopt a static position during the test leads to a degradation of its surface which isn't consistent with the real-life situation relevant for the scope of this invention, namely the wearing caused by the paper in the end-use devices, where there is always a sliding of the sheet. Thus, the wear measuring of the cylindrical material after the experience performed according to this method wouldn't correspond to the type of wearing that is object of this invention.

The evaluation method of the abrasiveness of the sheet surface in the paper machine present in patent US 4 253 913 describes a principle similar to the one of this invention, as it implements a relative movement of two bodies, measuring the abrasiveness of the sheet, by loss of the mass verified in the pin. This equipment refers to a device of rotational movement of the sheet, over which is put a metallic pin moved by an arm that thus applies certain pressure to it. Although this method is adquated to evaluate online the abrasion caused by the sheet in the paper machine, it presents clear limitations in the evaluation of discrete samples in a quality control perspective, since a large length of paper is necessary to cause a measurable wearing in the pin, and still only the abrasiveness in one of the directions of the paper, typically the direction along the paper machine, would be measured.

In this invention the relative movement of the test bodies is linear, in the XY plan, according to a determined and programmable course, thus providing the most varied test possibilities, according to different orientations and sequences. With this method, it can also be eliminated a difficulty inherent to the fixation of a sheet in a drum, which is the union area where there is inevitably a "gap" or a border.

Another aspect of this invention that is also a novelty refers to the measuring of the wearing in the test pin of the test *"in situ"* with continuous logging, and the loss of mass may be determined afterwards by weighing or simply by calculation. Is also a novelty the application of a graphite pin for determination of the wearing inflicted by the sheet along the test. This type of material suffers an abrasion higher than any metal as that is it's actual commercial function when in form of pencil leads.

### Summary of the Invention

The invention refers to an equipment and process designed to evaluate the abrasive properties of sheets of paper or other materials in the form of sheets or plaques, of plane and regular format.

It is based on an abrasive wearing test procedure of a graphite pin, of rubber or other materials that may suffer wearing caused by these surfaces, against a plane surface with a linear alternative movement in the XY plan, according to a previously defined, reproducible and programmed course.

This test allows performing the Quality Control of these products, and in a general way evaluating and comparing their properties and abrasive behaviour along a certain course and in several directions. The test results are monitored along the test, and in the end stored in an adequate support for subsequent calculation and control functions and for keeping an historic log of the properties of the so-characterised products.

By being implemented as Quality Control test, this process allows a value-added characterisation and control of the productive process.

The implementation equipment of this test process is composed of a base structure that serves as base to the positioning system of the experiment sample holder, two systems of linear movement in XY assembly, a mechanical arm of support to the experiment pin, a system of application of a defined load to the pin, a measuring system of the pin's wear, and also a mechanism of support of the arm when in rest.

There are also other mechanisms for positioning and fixing of the test sample, a mechanism of balance of forces in the arm that supports the pin and mechanisms of detection associated to the motion of the system.

It is also part of the equipment a control, acquisition and processing of the data from the visual interface, which indicates in real time the wearing graph of the experiment pin, along the defined experiment course. This device allows storing automatically the information concerning each test so that it may be used in a more intensive way after the visualisation and registry.

### Brief Description of the Drawings

The description that follows is based on the attached drawings where, without any limitative character, is represented;
Figure 1, a schematic view of the equipment operation
Figure 2, a lateral view of the equipment;
Figure 3, a three-dimensional view of the equipment;
Figure 4, the user interface; and
Figure 5, a flow chart of the equipment's control program.

### Detailed Description of the Invention

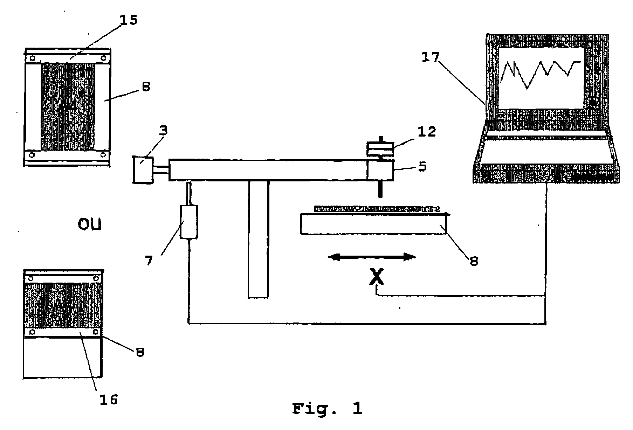

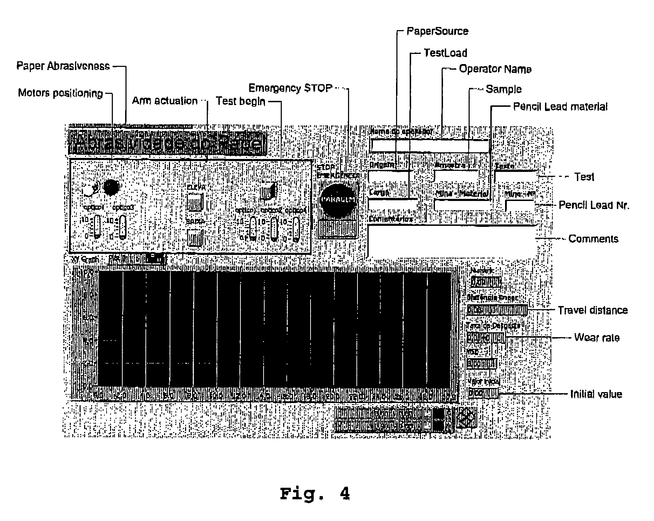

As it can be observed, figure 1 represents the A4 sheet placed in the support, in two of the different fixing positions that the equipment allows. The sheets or other test material's support is positioned under the balanced mechanical arm 2, and will move according to defined trajectories and routines, to make certain path that is controlled and monitored by computer 17 which performs an illustration of the course in the user interface. This interface is also represented in figure 4.

In figure 1 it is also represented the pin wear measuring device, the support 5 to the pin in the extremity of arm 2, and also the pin charging system, by a dead load method 12.

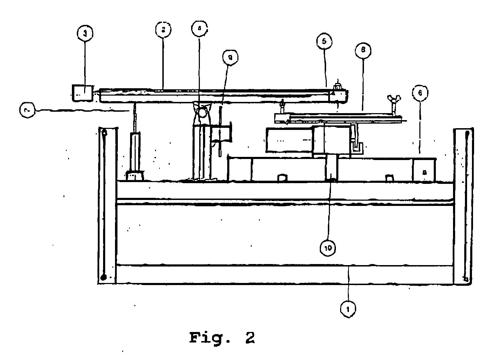

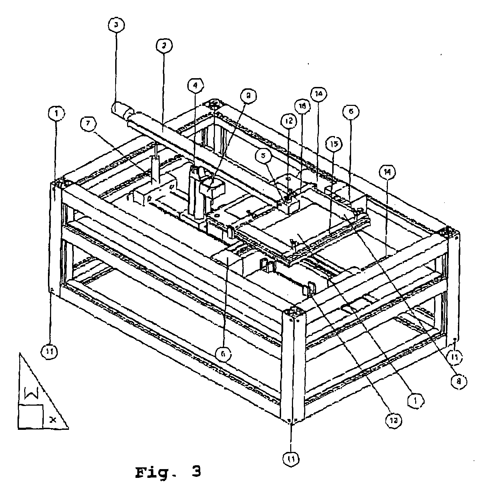

The equipment is represented in more detail in the views of the figure 2 and figure 3, where its constituent parts can be seen.

The equipment is composed of a structure 1, in modular profiles that allow an easy assembly and a high degree of stiffness of the substructures that support the elements of the equipment.

The entire structure is supported in four vibration dumper feet 11, made of a flexible material and with the form of half-spheres for better accommodating the structure.

The mechanical element that supports the experiment pin is an articulated arm 2 supported in structure 1 that allows one degree of freedom in the movement through articulation 4. This degree of freedom allows compensating the wear of the pin along the experiment. Note that this wearing will always be of a relatively low magnitude and, thus, this rotation movement will always be of a low angle.

This articulation allows also the positioning of the arm above the experiment area, when a test ends, in order to allow the changing of the sample and to prevent accidental collisions of the pin with the sample's support. This positioning is made through the elevation device 9, through a linear actuator that acts in the arm, causing its rotation around the axis.

The mechanical arm includes also a weight balance device 3, around the articulation axis 4, so that the only charge to be applied in the pin is the charge defined by the dead load 12 which is applied in the extremity directly over the pin. This charge 12 is applied on the pin support 5 and has a mass previously calibrated and defined as adequate for that test.

The sample movement is promoted by two linear axes 6, coupled in a XY type assembly, driven by DC 14 motors and a gear box. Each motor is coupled to an encoder that allows monitoring the movement of each one and combining that information with the pin wearing along the experiment. Two sensors 13 for each movement axis, associated to a switch 10, allow defining the course limits for each trajectory.

The information about the wearing suffered by the pin is given by a linear displacement transducer 7, usually called LVDT, which translates the descending movement of the pin, accompanying the movement of the arm in the place where it is coupled.

The support of the paper sheet 8 is then fixed to the movement system 6 and has two fixing modules of the sheet to the support. One of them is fixed 15 in an extremity and the other is mobile 16 in order to allow the fixation of the samples with dimensions smaller than the standard A4 format in figure 1.

Figure 4 represents the format and aspect of the visual interface of the computer with the operator. This interface has several fields disposed in the visualisation window. These fields have different natures, being some of test identification (sample, operator, dates, etc.), others of control (type of test, state of the sensors, switch buttons, etc.) and others of presentation of results (read values graphics, calculation of the slope, etc.).

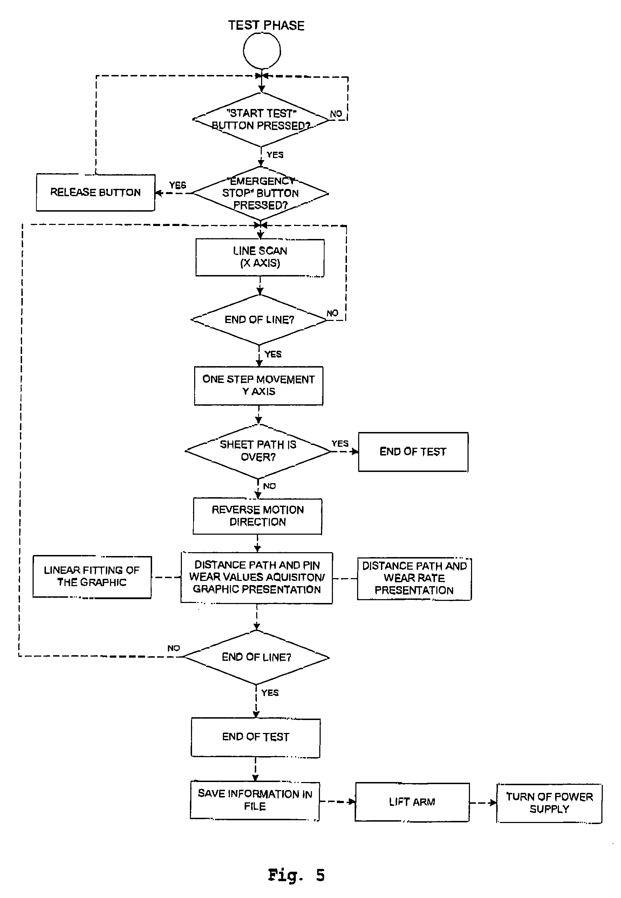

In figure 5 it is represented the system's control flow chart illustrating in an integrated way the group of devices and mechanisms that constitute the equipment.

## Claims

1. A process of evaluation of the abrasiveness of materials in the form of sheets or plaques, of plane and regular surface, **characterised by** evaluating the abrasive wearing of a pin against the surface of the material to be tested, which wearing is induced by the relative plane linear movement of the test sample under the mentioned pin, being the abrasiveness measured through the calculation of the slope of the function that translates the wearing of the mentioned pin along certain covered distance.

2. A process in accordance to the previous claim, **characterised by** the measuring of the test pin's wearing *"in situ"* is done continuously, being the loss of mass able to be determined later by weighing or simply by calculation.

3. A process in accordance to claim 1, **characterised by** the surface to be tested is paper.

4. A process in accordance to claim 1, **characterised by** the pin is of graphite.

5. A process in accordance to claim 1, **characterised by** the pin is of rubber.

6. A process in accordance to claim 1, **characterised by** it allows also evaluating alternatively the resistance to the abrasion of the materials used as pins.

7. A process in accordance to claim 1, **characterised by** it allows defining different trajectories and test routines for study of the anisotropic properties of the material in the several directions.

8. A process in accordance to claim 7, **characterised by** the calculation of the pin's wearing rate is made instantaneously through the measuring of the variation of the length in function of the experiment distance covered.

9. An equipment to evaluate the abrasiveness of materials in the form of sheets or plaques, of regular and plane surface, with application of the process according to claims 1 to 8, **characterised** it uses a mechanism of evaluation of the abrasive wearing of a pin against the surface of the material to be tested, comprising:
- a pin, of a material susceptible to be worn by the material to be tested, fixed over the testing sample;
- a mechanical arm 2 of support to the pin, supported in a mobile articulation 4, and balanced by an adjustable weight 3;
- a determined fixed load 12 applied on the pin, according to the dead load method;
- a safety actuation mechanism 10 and 13 applied to the mechanical arm that acts in pause and end of test situations;
- a linear movement mechanism of support to the testing sample over which acts the experiment pin, integrating a group of linear axes 6 independent and coupled in a XY assembly, which allows defining different trajectories and test routines for studies of the anisotropic properties of the material in the several directions;
- a monitoring device of the movement integrated in the XY linear axes;
- a support for the sample 8, fixed to the movement mechanism 6, composed of a flat base and two sample fixation devices, where one is static 15 and the other is mobile 16 to accommodate different sample formats;
- a system of measuring of linear displacements 7, coupled to the structure 1 and in contact with the mechanical arm 2, to allow calculating instantaneously the pin's wearing rate in function of the experiment distance covered; and
- an interface device with the user that allows him to define the parameters that characterise the test, visualise the evolution of the test with the indication of the instantaneously read and calculated values and to store the read and calculated data in an integrated and automatic way, allowing their treatment and posterior use.

10. An equipment in accordance to the previous claim, **characterised by** it allows also evaluating alternatively the resistance to abrasion of the materials used as pins.

11. An equipment in accordance to claim 8, **characterised by** the surface to be tested is paper.

12. An equipment in accordance to claim 8, **characterised by** the pin is of graphite.

13. An equipment in accordance to claim 8, **characterised by** the fact the pin is of rubber.
